# EUROPEAN PATENT SPECIFICATION

(11) **EP 4 620 166 B1**
(45) Date of publication and mention of the grant of the patent: **28.10.2026**
(21) Application number: 22966152.5
(22) Date of filing: 24.11.2022
(51) Int. Cl.: H04L 27/00, H04L 45/12

(54) **ENTITY AND METHOD FOR COMPUTING, ACCORDING TO FEATURES FOR PATH COMPUTATION, ONE OR MORE SHORTEST PATHS FROM A SOURCE TO A DESTINATION IN A NETWORK**
EINHEIT UND VERFAHREN ZUR BERECHNUNG GEMÄSS MERKMALEN ZUR PFADBERECHNUNG EINES ODER MEHRERER KÜRZESTEN PFADE VON EINER QUELLE ZU EINEM ZIEL IN EINEM NETZWERK
ENTITÉ ET PROCÉDÉ POUR CALCULER, SELON DES CARACTÉRISTIQUES DE CALCUL DE TRAJET, UN OU PLUSIEURS TRAJETS LES PLUS COURTS, D'UNE SOURCE À UNE DESTINATION, DANS UN RÉSEAU

(43) Date of publication of application: 24.09.2025
(73) Proprietor: Huawei Technologies Co., Ltd., Shenzhen, Guangdong 518129 (CN)
(72) Inventor: MARTIN, Sebastien, 80992 Munich (DE); LEGUAY, Jeremie, 80992 Munich (DE); BAUGUION, Pierre, 80992 Munich (DE); ZENG, Feng, 80992 Munich (DE); TANG, Ziye, Shenzhen, Guangdong 518129 (CN)
(74) Representative: Roth, Sebastian
(86) International application number: PCT/CN2022/133872
(87) International publication number: WO 2024/108457

(56) References cited:
- EP-A1- 2 608 465
- US-A1- 2002 172 157
- US-A1- 2015 319 078
- US-A1- 2016 234 099
- US-B1- 6 256 295
- LUO MIN ET AL: "An adaptive multi-path computation framework for centrally controlled networks", COMPUTER NETWORKS, ELSEVIER, AMSTERDAM, NL, vol. 83, 27 February 2015 (2015-02-27), pages 30 - 44, XP029162978, ISSN: 1389-1286, DOI: 10.1016/J.COMNET.2015.02.004

## Description

### TECHNICAL FIELD

The present disclosure relates to an entity and a method for computing, according to features for path computation, one or more shortest paths from a source to a destination in a network. The present disclosure relates to a computer program comprising instructions which, when the program is executed by a computer, cause the computer to carry out such a method. The present disclosure relates to a computer-readable storage medium comprising instructions which, when executed by a computer, cause the computer to carry out such a method.

### BACKGROUND

A task of network controllers in a network may be path computation. For example, a network controller may be used for computing one or more shortest path from a source to a destination in the network.

US 2016/234099 A1 relates to a controller that causes data of a flow to be routed at least partially based on an application associated with the flow.

### SUMMARY

Computer networks are often split into several areas, or domains. A domain is formally defined as any collection of network elements (e.g. routers, switches) within a common sphere of address management or path computational responsibility. Examples of such domains include Interior Gateway Protocol (IGP) areas and Autonomous Systems (AS). In order to isolate traffic and guarantee Quality of Service (QoS) inside one or several domains, traffic engineering protocols such as Multiprotocol Label Switching (MPLS) or Segment Routing (SR) may be used to establish tunnels for a set of source and destination pairs. Traffic engineering can optimize several objectives such as the resource utilization cost or load balancing, and satisfy several constraints such as a maximum delay, number of hops or protection against failures. Each domain may be managed by a network controller responsible for path computation and network optimization, e.g. being a Software Defined Networking (SDN) controller or a Path Computation Element (PCE).

When a PCE is deployed, the Path Computation Element Protocol (PCEP) may be used between routers and the controller, and between domain controllers themselves in the case of multi-domain path computation. Indeed, the PCE hosted inside the network controller is adapted to handle a wide range of path computation requests coming from routers or from neighboring domains. As a centralized control plane entity, each PCE may leverage on a global view of its domain to decide whether it is necessary to re-route and split flows and the most efficient way to do it, given the statistics on network load and traffic flows, and where new services should be routed.

The set of metrics and constraints that a PCE controller handles may be very large. In addition, each operator may also have its own operational constraints that may require custom path computation or routing algorithms. Small operators typically buy off-the-shelf PCEs from vendors, like any other network management tools, while big players have the resources to develop their own platform. In both cases, one of the main challenges is to be able to quickly handle new path computation and/or routing requirements coming from operational teams, in particular when the feature is not yet available in a PCE. The term "network operator" may be used as a synonym for the term "operator".

In view of the above, this disclosure aims to provide an entity for computing, according to features for path computation, one or more shortest paths from a source to a destination in a network. An objective of this disclosure is to provide such an entity that allows an improved handling of new path computations and/or routing requirements. A further objective may be to provide such an entity that supports a new requirement, which may be to be satisfied for a given service request.

These and other objectives are achieved by the solution of this disclosure as described in the independent claims. Advantageous implementations are further defined in the dependent claims. In the following, parts of the description and drawings referring to embodiments which are not covered by the claims are not presented as embodiments of the invention, but as examples useful for understanding the invention.

A first aspect of this disclosure provides an entity for computing, according to features for path computation, one or more shortest paths from a source to a destination in a network. The entity is configured to select, according to at least the features for path computation, two or more algorithms among algorithms of one or more path computation entities. The entity is configured to compute, using the selected two or more algorithms, the one or more shortest paths from the source to the destination such that the one or more shortest paths fulfil the features for path computation; wherein the entity is further configured to compute, using the selected two or more algorithms, the one or more shortest paths from the source to the destination by iteratively computing one or more shortest path for each feature of the features for path computation; use, in a first iteration, initial costs of arcs of the network for computing the one or more shortest paths for each feature; determine, in each iteration, whether among the computed shortest paths one or more shortest paths exist that fulfil all of the features for path computation; stop the iterative computation, in case among the computed shortest paths one or more shortest paths fulfilling all the features for path computation exist; and update, for each feature, the costs of the arcs of the network with a value depending on a mismatch between the one or more shortest paths computed with respect to the feature and the one or more shortest paths computed with respect to one or more remaining features of the features for path computation and start a further iteration using the respective updated costs of the arcs, in case among the computed shortest paths one or more shortest paths fulfilling all the features for path computation do not exist.

In other words, the first aspect proposes to combine two or more algorithms of one or more path computation entities, such as one or more path computation elements (PCEs), for computing, according to features for path computation, one or more shortest paths from a source to a destination in a network. This is different to an approach, according to which multiple PCEs are used for path computation such that several PCEs compute sub paths and combine them to only one path. In the aforementioned approach (in contrast to the first aspect), each PCE only computes a sub path, but not a path from a source to a destination. That is, the aforementioned approach merely allows distinct PCEs to be responsible for computation of parts (segments) of the path from the source to the destination. This approach does not consider a combination of multiple algorithms of one or more PCEs for computing a path from the source to the destination, as may be achieved by the entity of the first aspect.

Further, the proposed entity of the first aspect is also different to a second approach, according to which for PCE discovery, i.e. the mechanism for a router or a Path Computation Client (PCC) to discover available PCE, it is possible for a routing domain to contain multiple PCEs. In this second approach, only one PCE per domain is selected for each service request. If a first constraint "constraint A" is not available in a first PCE and a second constraint "constraint B" is not available in a second PCE, the second approach does not allow finding a path satisfying both constraints, the aforementioned first and second constraint. In contrast thereto, the entity of the first aspect allows to deal with the aforementioned situation, because it is configured to select, according to at least the features for path computation (such as "constraint A" and "constraint B") two or more algorithms among algorithms of one or more path computation entities (such as an algorithm for path computing while considering "constraint A" and an algorithm for path computing while considering "constraint B"). Thus, the entity of the first aspect allows combining multiple path computation features from a single PCE or several PCEs to support a new requirement that may be to be satisfied for a given service request.

The entity of the first aspect allows a network operator to add features to its own path computation entity (e.g. own PCE) or a third party's path computation entity (e.g. third party's PCE) without changing it. The entity of the first aspect allows for the combination of multiple algorithms from one or more path computation entities (e.g. one or more PCEs) to solve new traffic engineering requirements. Since the entity of the first aspect allows combining multiple algorithms from one or more path computation entities, the entity allows combining or assembling, for a path computation of a path from a source to a destination in a network, multiple features, which may be fulfilled by the multiple algorithms. Thus, the entity of the first aspect allows to use a set of available path computation entities (e.g. PCEs) to support requirements that are not support by any of the available path computation entities at hand or to implement them better (e.g. faster, solution of better quality). Further, allowing the combination of algorithms from different path computation entities or from a single path computation entity, new traffic engineering problems may be solved without the need of developing a new algorithm or modifying an existing algorithm.

For example, the entity of the first aspect may be used as a gap filling solution for achieving a new requirement while a path computation entity is developed for the new requirement. The entity of the first aspect may be used by an operator to combine features from different vendors, or augment his own path computation entity (e.g. PCE) with features from other vendors. In the latter case, if the path computation entity of the operator handles private data, e.g. for traffic prediction, the entity of the first aspect enables to integrate path computation features from third party path computation entities without the need to share these data. That is, sensitive data may be used inside each combined algorithm and remain private.

The entity may be referred to as "augmented network controller". In case the one or more path computation entities are one or more path computation elements (PCEs), the entity may be referred to as "augmented path computation element (augmented PCE)". The passage "shortest path from a source to a destination" and the passage "shortest end-to-end path" may be understood as synonyms.

A feature may comprise one or more constraints with regard to path computation or a feature may be one or more constraints with regard to path computation. In other words, a feature may represent a set of one or more constraints for a particular routing problem (e.g. a feature may define a path with maximum end-to-end-delay and maximum end-to-end jitter passing through a node of the network). The term "path computation feature" may be used as a synonym for the term "feature for path computation".

An algorithm may be referred to as an atomic algorithm. The algorithm of a path computation entity, such as a network controller (e.g. PCE), may be configured to solve one or more features, e.g. a set of features. For example, an algorithm with three features may be configured to find a shortest path with a maximum end-to-end delay, a shortest path with a maximum end-to-end jitter and a shortest path with a further constraint. The term "constrained shortest path" may be used for referring to an algorithm used for path computation. In other words, the algorithm of a path computation entity is an algorithm for computing one or more shortest paths according to one or more features. That is, the algorithm is a path computation algorithm considering one or more features when computing one or more shortest paths. Thus, the algorithm may be said to solve the one or more features of the algorithm.

The entity may be implemented by software and/or hardware. For example, the entity may be a computer. Alternatively, the entity may be an application. The entity may be a network device that is part of the network. For example the entity may be a network controller, such as PCE or any other known network controller.

The terms "arc" and "link" may be used as synonyms. The updated cost of an arc may be referred to as "driving cost". It represents the consensus or disagreement for each algorithm. If the driving cost is small then it represents a consensus and the arc is a good candidate for all algorithms. Otherwise, if the driving cost is big then it represents a disagreement where for at least one algorithm the arc is not a good candidate.

In an implementation form of the first aspect, the entity is configured to receive the features as an input.

In an implementation form of the first aspect, the entity is configured to receive, as an input, one or more parameters for computation and/or one or more user preferences with regard to the one or more path computation entities.

The one or more parameters for computation may be or may comprise at least one of the following: flag to focus on feasibility, flag to focus on optimality, one or more stopping conditions, one or more stopping conditions with time limit, number of iteration and epsilon gap (ε-gap). The epsilon gap is the distance to optimality. For instance, in case a solution at least at 10% to optimality is desired, then a request for computing the one or more shortest paths may be stopped when the one or more shortest paths are good enough (less than 10% to optimality).

The one or more user preferences with regard to the one or more path computation entities may be or may comprise at least one of the following: priority order between path computation entities and exclusion of one or more path computation entities for one or more features.

In an implementation form of the first aspect, the one or more path computation entities are part of a common domain of the network. In other words, the one or more path computation entities may be of a common area of the network.

In an implementation form of the first aspect, the one or more path computation entities are one or more network controllers and/or one or more algorithm libraries.

In an implementation form of the first aspect, the one or more path computation entities are one or more path computation elements (PCEs) or one or more software defined networking controllers (SDN controllers).

In Software Defined Networking (SDN), a control plan may be offloaded to a centralized controller which contains a path computation module similar to a path computation element (PCE). Therefore, descriptions with regard to PCE may correspondingly apply to SDN deployments where one or more SDN controllers may be augmented as one or more path computation entities, allowing to solve more advanced path computation problems.

In an implementation form of the first aspect, the features for path computation comprise or are at least two of the following: one or more upper bound constraints, one or more lower bound constraints, one or more range constraints, one or more network node inclusion conditions, number of disjoint paths, single path computation and multiple paths computation.

For example, the one or more upper bound constraints may be at least one of the following: maximum hop count, maximum delay (e.g. maximum end-to-end delay), maximum jitter (e.g. maximum end-to-end jitter), maximum size (maximum depth) of segment routing stacks, maximum size of load prediction, maximum costs etc.

For example, the one or more lower bound constraints may be at least one of the following: minimum hop count, minimum delay (e.g. minimum end-to-end delay), minimum jitter (e.g. minimum end-to-end jitter), minimum size (minimum depth) of segment routing stacks, minimum size of load prediction, minimum costs etc.

For example, the one or more range constraints may be at least one of the following: bandwidth, range for hop count, range for delay (e.g. range for end-to-end delay), range for jitter (e.g. range for end-to-end jitter), range for size of segment routing stacks, range for size of load prediction, range for costs etc.

In an implementation form of the first aspect, a data base comprises the algorithms of multiple path computation entities, the entity comprises the data base or is configured to access the data base, and the entity is configured to select the two or more algorithms among algorithms of the multiple path computation entities of the data base.

In other words, the data base may be part of the entity or may be an external data base. In both cases, the entity may be configured to access the data base, e.g. obtain data (i.e. information) from the data base and/or store data (i.e. information) in the data base.

In an implementation form of the first aspect, the entity is configured to select, according to at least the features for path computation, the two or more algorithms among the algorithms of the one or more path computation entities such that each feature of the features is covered by at least one of the two or more algorithms.

In an implementation form of the first aspect, the entity is configured to select, according to at least the features for path computation, the two or more algorithms among the algorithms of the one or more path computation entities such that one or more selected path computation entities, of which the two or more algorithms are selected, of the one or more path computation entities cover the features.

In an implementation form of the first aspect, the entity is configured to select, according to at least the features for path computation, the two or more algorithms among the algorithms of the one or more path computation entities such that a cost associated with a utilization of the selected two or more algorithms is minimum.

In an implementation form of the first aspect, the cost associate with a utilization of the selected two or more algorithms represents at least one of a preference for a path computation entity, a financial cost and an efficiency of a path computation entity.

In an implementation form of the first aspect, the entity is configured to iteratively compute the one or more shortest paths for each feature of the features by performing a column generation algorithm using a restricted master problem with constraints defined by the following variables: A first set of variables comprising binary link choice variables to construct an elementary path from the source to the destination, and a second set of variables comprising a binary path choice variable for each feature and each path of a set of paths computable by an algorithm covering the feature of the two or more algorithms. The binary link choice variables may be constrained to be selected along each arc of a path selected according to the second set of variables.

The entity may be configured to determine, in each iteration after the first iteration, whether among the computed shortest paths one or more shortest paths fulfilling all of the features exist by performing a branch-and-price algorithm using the updated costs.

In an implementation form of the first aspect, the entity is configured to update, for each feature, the costs of the arcs of the network by using a linear programming solver. The entity may be configured to consider the restricted master problem (RMP), where variables may be relaxed. For example, fractional may be greater than or equal to zero.

In an implementation form of the first aspect, the entity is configured to execute, in each iteration, the two or more algorithms sequentially or in parallel.

In order to achieve the entity according to the first aspect of this disclosure, some or all of the implementation forms and optional features of the first aspect, as described above, may be combined with each other.

A second aspect of this disclosure provides a method for computing, according to features for path computation, one or more shortest paths from a source to a destination in a network. The method comprises selecting, according to at least the features for path computation, two or more algorithms among algorithms of one or more path computation entities. The method comprises computing, using the selected two or more algorithms, the one or more shortest paths from the source to the destination such that the one or more shortest paths fulfil the features; Wherein the method further comprises computing, using the selected two or more algorithms, the one or more shortest paths from the source to the destination by iteratively computing one or more shortest path for each feature of the features for path computation; using, in a first iteration, initial costs of arcs of the network for computing the one or more shortest paths for each feature; determining, in each iteration, whether among the computed shortest paths one or more shortest paths exist that fulfil all of the features for path computation; stopping the iterative computation, in case among the computed shortest paths one or more shortest paths fulfilling all the features for path computation exist; and updating, for each feature, the costs of the arcs of the network with a value depending on a mismatch between the one or more shortest paths computed with respect to the feature and the one or more shortest paths computed with respect to one or more remaining features of the features for path computation and start a further iteration using the respective updated costs of the arcs, in case among the computed shortest paths one or more shortest paths fulfilling all the features for path computation do not exist.

In an implementation form of the second aspect, the method comprises receiving the features as an input.

In an implementation form of the second aspect, the method comprises receiving, as an input, one or more parameters for computation and/or one or more user preferences with regard to the one or more path computation entities.

In an implementation form of the second aspect, the one or more path computation entities are part of a common domain of the network. In other words, the one or more path computation entities may be of a common area of the network.

In an implementation form of the second aspect, the one or more path computation entities are one or more network controllers and/or one or more algorithm libraries.

In an implementation form of the second aspect, the one or more path computation entities are one or more path computation elements or one or more software defined networking controllers.

In an implementation form of the second aspect, the features for path computation comprise or are at least two of the following: one or more upper bound constraints, one or more lower bound constraints, one or more range constraints, one or more network node inclusion conditions, number of disjoint paths, single path computation and multiple paths computation.

In an implementation form of the second aspect, a data base comprises the algorithms of multiple path computation entities. The method may comprise accessing the data base. The method may comprise selecting the two or more algorithms among algorithms of the multiple path computation entities of the data base.

In an implementation form of the second aspect, the method comprises selecting, according to at least the features for path computation, the two or more algorithms among the algorithms of the one or more path computation entities such that each feature of the features is covered by at least one of the two or more algorithms.

In an implementation form of the second aspect, the method comprises selecting, according to at least the features for path computation, the two or more algorithms among the algorithms of the one or more path computation entities such that one or more selected path computation entities, of which the two or more algorithms are selected, of the one or more path computation entities cover the features.

In an implementation form of the second aspect, the method comprises selecting, according to at least the features for path computation, the two or more algorithms among the algorithms of the one or more path computation entities such that a cost associated with a utilization of the selected two or more algorithms is minimum.

In an implementation form of the second aspect, the cost associate with a utilization of the selected two or more algorithms represents at least one of a preference for a path computation entity, a financial cost and an efficiency of a path computation entity.

In an implementation form of the second aspect, the method comprises iteratively computing the one or more shortest paths for each feature of the features by performing a column generation algorithm using a restricted master problem with constraints defined by the following variables: A first set of variables comprising binary link choice variables to construct an elementary path from the source to the destination, and a second set of variables comprising a binary path choice variable for each feature and each path of a set of paths computable by an algorithm covering the feature of the two or more algorithms. The binary link choice variables may be constrained to be selected along each arc of a path selected according to the second set of variables.

In an implementation form of the second aspect, the method comprises updating, for each feature, the costs of the arcs of the network by using a linear programming solver.

In an implementation form of the second aspect, the method comprises executing, in each iteration, the two or more algorithms sequentially or in parallel.

The description of the entity according to the first aspect of this disclosure is correspondingly valid for the method of the second aspect of this disclosure.

The method of the second aspect and its implementation forms and optional features achieve the same advantages as the entity of the first aspect and its respective implementation forms and respective optional features.

In order to achieve the method according to the second aspect of this disclosure, some or all of the implementation forms and optional features of the second aspect, as described above, may be combined with each other.

A third aspect of this disclosure provides a computer program comprising instructions which, when the program is executed by a computer, cause the computer to perform the method according to the second aspect or any of its implementation forms.

A fourth aspect of this disclosure provides a computer-readable storage medium comprising instructions which, when executed by a computer, cause the computer to carry out the method according to the second aspect or any of its implementation forms.

The computer program of the third aspect and the computer-readable storage medium of the fourth aspect each achieve the same advantages as the entity of the first aspect and its respective implementation forms and respective optional features.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- **Fig. 1**: shows an entity according to this disclosure.
- **Fig. 2**: shows a method according to this disclosure.
- **Fig. 3**: shows an example of an implementation form of the entity of Fig. 1.
- **Fig. 4**: shows an example of a computation, which the entity of Fig. 3 is configured to perform.
- **Fig. 5**: shows an example of steps of a computation, which the entity of Fig. 3 may be configured to perform.
- **Fig. 6**: shows an example of a flow chart of a procedure, which the entity of Fig. 3 is configured to perform.
- **Fig. 7**: shows an example of selecting, by the entity of Fig. 3, algorithms for desired features.

In the Figs. corresponding features are labelled with the same reference sign.

### DETAILED DESCRIPTION OF EMBODIMENTS

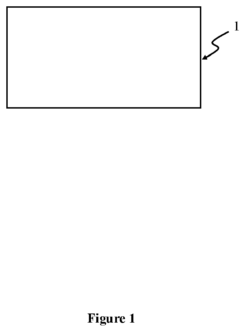

**Fig. 1** shows an entity according to this disclosure. The entity 1 of Fig. 1 is an example of the entity according to the first aspect of this disclosure. The description of the entity according to the first aspect is valid for the entity 1 of Fig. 1.

The entity of Fig. 1 is an entity for computing, according to features for path computation, one or more shortest paths from a source to a destination in a network. The entity 1 is configured to select, according to at least the features for path computation, two or more algorithms among algorithms of one or more path computation entities. The entity 1 is configured to compute, using the selected two or more algorithms, the one or more shortest paths from the source to the destination such that the one or more shortest paths fulfil the features.

The entity 1 may be a computer. Alternatively, the entity 1 may be an application. The entity 1 may be a network device that is part of the network. For example, the entity 1 may be a network controller, such as a Software Defined Networking (SDN) controller, a Path Computation Element (PCE) or any other known network controller.

The entity 1 may be a device comprising a processor or processing circuitry (not shown) configured to perform, conduct or initiate the various operations of the device (i.e. the entity 1) described herein. The processing circuitry may comprise hardware and/or the processing circuitry may be controlled by software. The hardware may comprise analogue circuitry or digital circuitry, or both analogue and digital circuitry. The digital circuitry may comprise components such as application-specific integrated circuits (ASICs), field-programmable arrays (FPGAs), digital signal processors (DSPs), or multi-purpose processors. The device may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the device (i.e. the entity 1) to be performed. In one embodiment, the processing circuitry comprises one or more processors and a non-transitory memory connected to the one or more processors. The non-transitory memory may carry executable program code which, when executed by the one or more processors, causes the device (i.e. the entity 1) to perform, conduct or initiate the operations or methods described herein.

The entity 1 of Fig. 1 may be used for example in case an operator has its own path computation entity and wants to combine it with path computation entities from two different vendors. The own path computation entity and the path computation entities may be network controllers and/or algorithm libraries. For example, the own path computation entity and the path computation entities may be path computation elements (PCEs) or software defined networking controllers (SDN controllers). For the description of the aforementioned exemplary use case of the entity 1, it is assumed that the own path computation entity and the path computation entities are PCEs. This is only by way of example and, thus, the description of the exemplary use case is correspondingly valid in case that the own path computation entity and the path computation entities are a different type of path computation entity.

It is assumed that the PCE from a first vendor supports path computation with node inclusion and one upper bound constraint (e.g. maximum hop count). Further, it is assumed that the PCE from a second vendor supports path computation with node inclusion, one upper bound constraint and one range constraint. The PCE of the operator is assumed to support path computation with two upper bound constraints (e.g. maximum delay and hop count), a maximum size for segment routing (SR) label stacks and load prediction using data coming from its internal network monitoring. Now it is assumed that the network operator is looking for a way to support SR-path computation with max depth of label stacks, load prediction, four upper bound constraints and one range constraint. The entity 1 of Fig. 1 may leverage algorithms from the available PCEs, i.e. the PCE of the operator and the PCEs of the two vendors, to solve this new traffic engineering (TE) problem using a combination of features supported by the operator's PCE and the PCEs of the vendors by selecting the respective algorithms from the operator's PCE and the PCEs of the vendors.

While the entity 1 may combine multiple features from different PCEs, the entity 1 may also combine features from the same PCE, e.g. the operator's PCE, for instance to satisfy a four upper bound constraint. For example, a four upper bound constraint may be satisfied by combining two algorithms of the operator's PCE that each allow computation with two upper bound constraints. Advantages of the entity 1 of Fig. 1 comprise the following: The operator's PCE may be easily augmented with additional features and no unnecessary information is shared between the operator and third party PCEs (sensitive data from operator are protected, e.g. load prediction in the example).

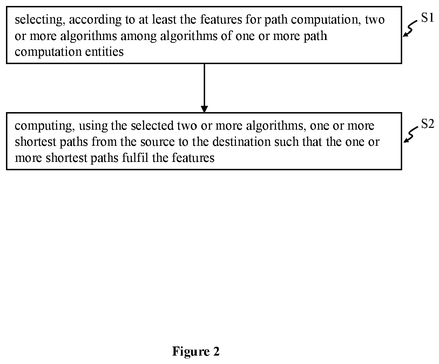

For further information on the entity 1, e.g. on implementation forms thereof, reference is made to the description of the entity according to the first aspect of this disclosure and the description of the following Figs. 2 to 7.

**Fig. 2** shows a method according to this disclosure. The method of Fig. 2 is an example of the method according to the second aspect of this disclosure. The description of the method according to the second aspect is valid for the method of Fig. 2.

The method of Fig. 2 is a method for computing, according to features for path computation, one or more shortest paths from a source to a destination in a network. As shown in Fig. 2, the method comprises, as a step S1, selecting, according to at least the features for path computation, two or more algorithms among algorithms of one or more path computation entities. The method comprises, as a next second step S2 following the step S1, computing, using the selected two or more algorithms, the one or more shortest paths from the source to the destination such that the one or more shortest paths fulfil the features.

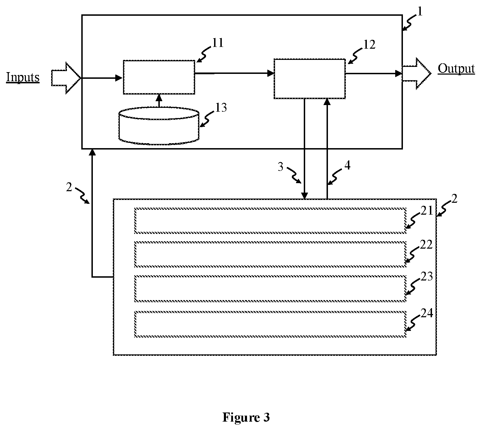

The entity 1 of Fig. 1 may be configured to perform the method of Fig. 2. For further information on the method of Fig. 2, e.g. on implementation forms thereof, reference is made to the description of the method according to the second aspect of this disclosure and the description of the following Figs. 3 to 7.

**Fig. 3** shows an example of an implementation form of the entity of Fig. 1. Thus, the description of Fig. 1 is also valid for the entity 1 of Fig. 3.

As shown in Fig. 3, the entity 1 is configured to receive inputs. The inputs may comprise a request to compute, according to features for path computation, one or more shortest paths from a source to a destination in a network such that the one or more shortest paths fulfil the features. Thus, the inputs may comprise the request for the computation of a constrained shortest path or constrained multiple shortest paths (e.g. on a given metric) and a list of features for path computation according to which the constrained shortest path or constrained multiple shortest paths are to be computed. That is, the request may comprise a list of constraints, i.e. a least of features. For example, the list of features may comprise at least two of maximum hop, bandwidth, maximum end-to-end delay, range constraint on resources with additive metrics, range constraint on the cost, number of disjoint paths etc. Further examples of possible features are as outlined above in the description of implementation forms of the entity according to the first aspect of this disclosure. The inputs may comprise one or more parameters for computation and/or one or more user preferences with regard to the one or more path computation entities.

The one or more parameters for computation may be or may comprise at least one of the following: flag to focus on feasibility, flag to focus on optimality, one or more stopping conditions, one or more stopping conditions with time limit, number of iterations, epsilon gap (ε-gap) etc. The epsilon gap is the distance to optimality. For instance, in case a solution at least at 10% to optimality is desired, then a request for computing the one or more shortest paths may be stopped when the one or more shortest paths are good enough (less than 10% to optimality). The one or more user preferences with regard to the one or more path computation entities may be or may comprise at least one of the following: priority order between path computation entities, exclusion of one or more path computation entities for one or more features etc.

The entity 1 may maintain a data base 13 of available algorithms 2 and, thus, respective features offered by available one or more path computation entities. In Fig. 3, four different algorithms 21, 22, 23 and 24 are shown, as an example, of the pool of the available algorithms 2 of the available one or more path computation entities. These algorithms as well as this number of algorithms is only by way of example and does not limit this disclosure, i.e. it may be different. The box labelled with the reference sign 21 may represent a first algorithm with a first feature (i.e. with a first configuration) from a first path computation entity (e.g. a path computation entity of a vendor). The box labelled with the reference sign 22 may represent a first algorithm with a second feature (i.e. with a second configuration) from the first path computation entity. The box labelled with the reference sign 23 may represent a second algorithm with a first feature (i.e. with a first configuration) from the first path computation entity. The box labelled with the reference sign 24 may represent a first algorithm with a first feature (i.e. with a first configuration) from a second path computation entity (e.g. a path computation entity of an operator, i.e. customer). The passage "an algorithm with a feature" may be understood such that the algorithm is adapted according to the feature so that when computing the algorithm the path computation is performed according to the feature, e.g. the path computation is performed to fulfil the feature and, thus, one or more constraints.

As shown in Fig. 3, the entity 1 may comprise the data base 13 and is configured to access the data base 13. Alternatively, the data base 13 may be an external component (not shown in Fig. 3) and the entity 1 may be configured to access the data base 13.

The entity 1 may comprise a strategy definition module 11, which is configured to identify a list of algorithms with their respective feature (may also be called "configuration") to satisfy a given path computation request received as an input. The strategy definition module 11 may be configured to select for each feature of the path computation request (i.e. for each constraint or set of constraints) the suitable (fitting) path computation entity among the available path computation entities based on available functionalities and optionally user preferences. The user preferences may be received as inputs. In other words, the strategy definition module 11 is configured to select, according to one or more features for paths computation of a path computation request received by the entity 1 as an input, two or more algorithms among available algorithms of one or more available path computation entities. The available algorithms of one or more available path computation entities may be stored in the data base 13. Thus, the strategy definition module 11 is configured to access the data base 13, as indicated in Fig. 3 by the arrow from the data base 13 to the strategy definition module 11. The terms "selection module" and "algorithm selection module" may be used for referring to the strategy definition module 11.

As shown in Fig. 3, the entity 1 may comprise an algorithm orchestration module 12 that may receive the selected two or more algorithms, which are selected by the strategy definition module 11, as indicated in Fig. 3 by the arrow from the strategy definition module 11 to the algorithm orchestration module 12. The algorithm orchestration module 12 is configured to call algorithms (i.e. perform or execute the algorithms) from the selected two or more algorithms in an iterative fashion such that a consensus is found between all the selected two or more algorithms, i.e. such that a good quality solution is found and feasible for each of the selected two or more algorithms. This allows to find one or more shortest paths fulfilling the features of the path computation request. The algorithm orchestration module 12 may be configured to quantify the consensus and disagreement to drive each selected algorithm at each iteration. At each iteration the driving cost of each link of the network may represent the consensus or the disagreement for each selected algorithm. If the driving cost is small, then it represents a consensus and is a good candidate for all selected algorithms. That is, if the algorithm orchestration module 12 determines in a current iteration that the driving cost is small, then it may determine that the computation result in the current iteration is sufficient for fulfilling the path computation features, according to which the selected two or more algorithms have been selected. Otherwise if the driving cost is big, then it represents a disagreement where for at least one algorithm of the selected algorithm this link is not a good candidate. That is, if the algorithm orchestration module 12 determines in a current iteration that the driving cost is big, then it may determine that the computation result in the current iteration does not allow fulfilling at least one of the path computation features, according to which the selected two or more algorithms have been selected.

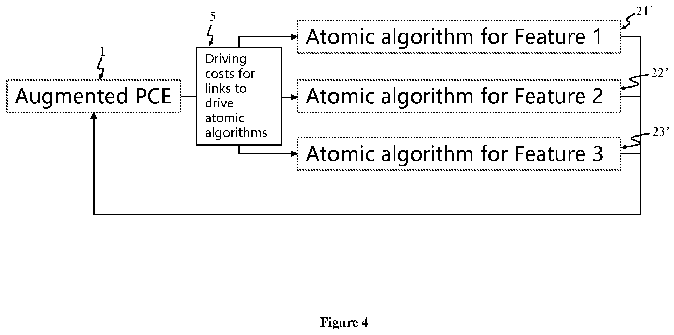

An example of the use of driving costs by the algorithm orchestration module 12 for computing, using the selected two or more algorithms, the one or more shortest paths from the source to the destination in the network such that the one or more shortest paths fulfil the features as requested by the path computation request (that may be received by the entity 1 as inputs) may be described with regard to Fig. 4. **Fig. 4** shows an example of a computation, which the entity of Fig. 3 is configured to perform.

For the example of Fig. 4, it is assumed that three algorithms 21', 22' and 23' from two path computation entities have been selected by the strategy definition module 11 and, thus, the algorithm orchestration module 12 uses these three selected algorithms for the shortest path computation according to the path computation request received by the entity 1 as an input. It is assumed that the box labelled with the reference sign 21' represents an algorithm for a first feature (e.g. being a maximum end-to-end delay) from a first path computation entity (e.g. a path computation entity of a vendor) of the two path computation entities. Further, it is assumed that the box labelled with the reference sign 22' represents an algorithm for a second feature (e.g. being a node inclusion) from the first path computation entity of the two path computation entities. Moreover, it is assumed that the box labelled with the reference sign 23' represents an algorithm for a third feature (e.g. minimizing congestion with prediction) from a second path computation entity (e.g. a path computation entity of an operator, i.e. customer) of the two path computation entities. These algorithms as well as this number of algorithms is only by way of example and does not limit this disclosure, i.e. it may be different. The box labelled with the reference sign 5 indicates that, for the path computation, the algorithm orchestration module 12 may be configured to use, at each iteration, driving costs for links of the network to drive the algorithms 21', 22' and 23' so that the computation using the three algorithms 21', 22' and 23' converges to a consensus solution. Each algorithm of the algorithms 21', 22' and 23' may, at each iteration, return the best shortest path between the source and the destination considering driving costs on links given by the algorithm orchestration module 12. At each iteration three shortest paths may be returned by the three algorithms 21', 22' and 23' allowing the algorithm orchestration module 12 to converge to a feasible solution for a shortest path between the source and the destination that fulfils all features, i.e. the aforementioned first, second and third feature. At each iteration the algorithm orchestration module 12 may compute driving costs to guide the algorithms 21', 22' and 23' at the next iteration.

As outlined above, the algorithm orchestration module 12 may compute a single shortest path between the source and the destination or multiple shortest paths between the source and the destination. In the case of multiple shortest paths computation, the algorithms 21', 22' and 23' may return at each iteration of the path computation multiple shortest paths. The algorithm orchestration module 12 may return multiple shortest paths at the end of the path computation. In each iteration, the algorithm orchestration module 12 may establish a consensus between different sets of shortest paths provided by the algorithms 21', 22' and 23'.

Thus, as shown in Fig. 3, for the computation of one or more shortest paths according to the features of the path computation request, the algorithm orchestration module 12 may use driving costs for each link of the network, as indicated in Fig. 3 with the arrow labelled with the reference sign 3. At each iteration of the path computation the algorithm orchestration module 12 may receive the best path or best multiple paths for each of the algorithms 21', 22' and 23', as indicated in Fig. 3 with the arrow labelled with the reference sign 4.

The strategy definition module 11, the algorithm orchestration module 12 and the data base 13 of the entity 1 may be implemented by software and/or hardware. The strategy definition module 11, the algorithm orchestration module 12 and the data base 13 of the entity 1 may form or be part of a computation and/or processing unit of the entity 1 for performing the path computation.

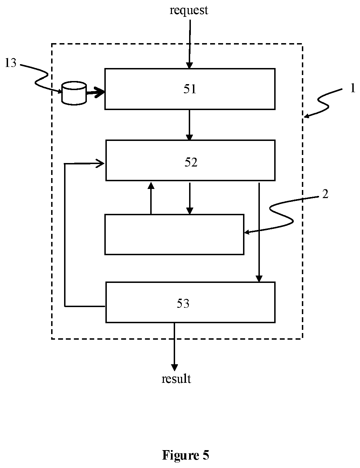

**Fig. 5** shows an example of steps of a computation, which the entity of Fig. 3 may be configured to perform. As shown in Fig. 5, the entity 1 may receive a path computation request that requests the entity to compute, according to features for path computation, one or more shortest paths from a source to a destination in a network. In a first computation step 51, that may be called strategy definition, the entity 1 (e.g. strategy definition module 11) identifies which algorithms of the algorithms of the data base 13 should be used with which feature (i.e. with which configuration). For this, it may use the algorithms of the data base 13 and optionally user preferences, which may be received by the entity 1 as inputs. In a second step 52, which may be called execution of algorithms, the entity 1 (e.g. algorithm orchestration module 12) may call each algorithm of the algorithms identified (i.e. selected) in the first step 51 from the available algorithms 2 in sequence or in parallel. The entity 1 (e.g. algorithm orchestration module 12) may initialize a set of driving costs per identified algorithm (parallel execution) or for all identified algorithm (sequential execution) before execution their execution. In a third step 53, which may be called update of driving costs, the entity 1 (e.g. algorithm orchestration module 12) may collect a path or multiple paths computation results from all identified algorithms. In the third step 53, the entity 1 (e.g. algorithm orchestration module 12) may update the driving costs. The overall process for path computation may return after the third step 53 to the second step 52, in case the entity 1 (e.g. algorithm orchestration module 12) determines that the path computation results may be improved. In other words, the overall process for path computation may return after the third step 53 to the second step 52, in case the entity 1 (e.g. algorithm orchestration module 12) determines that the path computation results are not optimal or not feasible.

In case the one or more path computation entities are assumed to be PCEs the creation of the data base 13 of the entity 1 of Fig. 3 may be implemented using the Path Computation Element Protocol (PCEP). The communication between the algorithm orchestration module 12 and each PCE may be implemented using PCEP.

For example, the population of the data base 13 comprising a list of available features from available algorithms may be filled manually or using the PCE discovery mechanism from PCEP (RFC 4674 - Requirements for Path Computation Element (PCE) Discovery).

For executions of algorithms the entity 1 may act as a Path Computation Client (PCC) and issue path computation requests as described in RFC 5440 (Path Computation Element (PCE) Communication Protocol) to selected PCEs (e.g. selected by the strategy definition module 11). In this case, each PCE may obtain network information like topology, bandwidth, link costs, existing label switched paths (L SPs) etc., which may be stored in Traffic Engineering Database (TED). The information used for the path computation may be driving costs that are used to find a consensus.

For an update of driving costs, the driving costs may be stored in the Traffic Engineering Database (TED). They may be collected via Border Gateway Protocol Link State (BGP-LS) or another Application Programming Interface (API). For parallel execution, each algorithm may have its own set of driving costs, for sequential execution, there may be only one set of driving cost. The right (suitable) set of driving costs to use may be selected using a custom metric type in path computation requests (PCE Req). The driving costs may be updated directly in the TED or passed as a parameter of path computation requests (PCE Req) using vendor specific information, as defined in RFC 7470: Conveying Vendor-Specific Constraints in the Path Computation Element Communication Protocol.

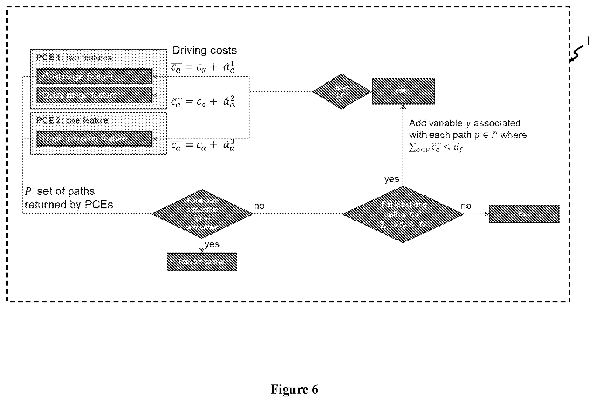

**Fig. 6** shows an example of a flow chart of a procedure (i.e. algorithm), which the entity of Fig. 3 is configured to perform. The algorithm orchestration module 12 may perform the procedure of Fig. 6 for computing one or more shortest paths from the source to the destination in the network according to features for path computation, as outlined above. In the following description of Fig. 6, it is assumed that the one or more path computation entities are PCEs. This is only by way of example and does not limit this disclosure. Thus, the following description is correspondingly valid for other types of path computation entities.

For the description of the procedure of Fig. 6 the following notations are assumed:
G = (V, A) is a network, where V is the set of routers and A is the set of links (i.e. arcs). For each link a∈A an original cost cₐ is considered (defined by an operator to calculate shortest paths). F is the set of features associated to each algorithm from each PCE. In the following *c̅ₐ* represents the driving cost. *P_{f}* is the set of paths that may be found by the algorithm associated with the feature *f*.

A possible implementation of the path computation by the entity 1, e.g. the algorithm orchestration module 12, is to consider an Integer Linear Program (ILP) with two types of variables as illustrated in the following problem formulation: $min {\sum }_{a ∈ A} {c}_{a} {x}_{a}$ ${α}_{u} {\sum }_{a ∈ {δ}^{+} \left(u\right)} {x}_{a} \leq 1 ∀ u ∈ V$ ${α}_{f} {\sum }_{p ∈ {P}_{f}} {y}_{p}^{f} = 1 ∀ f ∈ F$ ${α}_{a}^{r} {\sum }_{p ∈ {P}_{f} : a ∈ p} {y}_{p}^{f} \leq {x}_{a} ∀ f ∈ F ∀ a ∈ A$
*xₐ* ∈ {0,1}: *equals to* 1 *if link a belongs to path p, 0 otherwise.*
*For each a E A.*
${y}_{p}^{f} ∈ \left\{0, 1\right\}$: *equals to* 1 *if path p is selected for feature f, 0 otherwise.*
   *For each f* E *F and p* ∈ *P_{f}.*

The first set of variables includes binary link choice variables *xₐ*(1 if link *a* is selected, 0 otherwise) to construct an elementary path from the source to the destination. This may be a first constraint of the problem formulation. It corresponds to the path that will be finally returned. The second set of variables consists in binary path choice variable ( ${y}_{p}^{f}$ is 1 if selected, 0 otherwise) for each feature *f* and each path p ∈ *P_{f}.* For each feature, a unique path p is to be selected among the set of all feasible paths *P_{f}.* This may be a second constraint of the problem formulation. In addition to the first and second constraints of the problem formulation, link choice variables *xₐ* are constrained to be selected along each link of the selected path. This may be a third constraint of the problem formulation. To ensure that, among all the different features, all paths ${y}_{p}^{f}$ for all features converge to the same path (consensus), link choice variables *xₐ* may be constrained to be selected along each link of the selected path (third constraint). By considering an objective function that minimizes the original cost over selected links (cost *cₐ* for each link), the ILP may select a single shortest path.

The number of paths in a network associated with a specific feature may be an exponential number. This practically means that there may be cases where the entity 1, e.g. the algorithm orchestration module 12, may not enumerate *P_{f}* and solve the ILP formulation. However, the entity 1, e.g. the algorithm orchestration module 12, may be configured to generate them in an iterative manner using column generation according to "Desaulniers, Guy, Jacques Desrosiers, and Marius M. Solomon, eds. Column generation. Vol. 5. Springer Science & Business Media, 2006", which is a standard technique from mathematical programming.

At the beginning of the procedure of Fig. 6, the entity 1, e.g. the algorithm orchestration module 12, may ask for each feature (of the features according to which the one or more shortest paths are to be computed) the shortest path ${p}_{0}^{f}$ to each PCE where the original cost *cₐ* is considered. The linear relaxation (variable between [0,1]) of this model may be denoted by restricted master problem (RMP) where variables *xₐ* for all *a* ∈ *A and* ${y}_{{p}_{0}^{f}}$ for each *f* ∈ F. The dual variables associated with the aforementioned first, second and third constraints may be denoted by *αᵤ, α_{f}* and ${α}_{a}^{f}$.

The column generation procedure iteratively introduces the binary path choice variable ${y}_{p}^{f}$ according to the path that is returned by each PCE request. From the column generation algorithm perspective, the generation of such a variable is realized solving a so called pricing problem that translates into a request to the PCE to solve a shortest path computation problem with the driving costs. Then, the paths returned are converted into a ${y}_{p}^{f}$ path variable and added into the RMP if it is able to improve the linear relaxation. At each iteration the entity 1, e.g. the algorithm orchestration module 12, may solve the RMP using a linear programming solver. It contains the columns, associated to the paths, able to improve the linear relaxation generated by all PCEs solving a pricing problem. The entity 1, e.g. the algorithm orchestration module 12, continues the iterative column generation procedure until no new column may be added.

The workflow for the resolution of pricing problem that may be performed by the entity 1, e.g. the algorithm orchestration module 12, is shown in Fig. 6 (interaction with the restricted master problem, update of arc costs, condition to add a column based on the value *α̇_{f}* of the dual variable *α_{f}* associated to the second constraint of the above mentioned problem formulation). In Fig. 6, it is assumed that the entity 1, e.g. the strategy definition module 11, selects, according to three features of the path computation request, three algorithms among algorithms of two PCEs (as path computation entities). A first algorithm is selected from a first PCE "PCE 1" for a cost range feature, a second algorithm is selected from the first PCE "PCE 1" for a delay range feature, and a third algorithm is selected from a second PCE "PCE 2" for a node inclusion feature. This is only by way of example and may be different. The convergence of such a procedure performable by the entity 1, e.g. the algorithm orchestration module 12, is guaranteed by the driving cost vector given to each PCE solving a pricing problem which is updated from the value ${\dot{α}}_{a}^{f}$ of the dual variable ${α}_{a}^{f}$ obtained at each column generation iteration. The entity 1, e.g. the algorithm orchestration module 12, using the linear programming solver allows returning at each iteration the value of each dual variable by the solver after solving the RMP. The link-cost update for a given pricing problem (i.e. shortest path problem) associated to feature *f* ∈ F may be realized by ${\overline{c}}_{a} = {c}_{a} + {\dot{α}}_{a}^{f}$ for all links. These updated costs represent the propensities to satisfy or not all the constraints in the ILP (which describes the unicity of the shared path among the different PCE), therefore these costs allow driving the different PCEs to agree on a common path.

When no new columns may be added at a given iteration, the entity 1, e.g. the algorithm orchestration module 12, may determine that the optimal solution of the relaxed problem (i.e. linear problem) is found. The entity 1, e.g. the algorithm orchestration module 12, may round the found solution using previously generated paths to an integer solution, being a single elementary path. Optionally, the entity 1, e.g. the algorithm orchestration module 12, may perform a branch-and-price algorithm to solve the problem to optimality when desired.

Performing the resolution of the restricted LP of the procedure of Fig. 6 may be part of the third step 53 of the computation of Fig. 3 (i.e. update of the driving costs). Performing the resolution of pricing sub-problems of the procedure of Fig. 6 may be part of the second step 52 of the computation of Fig. 3 (i.e. execution of algorithms).

In view of the above, the entity 1, e.g. the algorithm orchestration module 12, may be configured to compute, using the selected two or more algorithms (selected by the strategy definition module 11), the one or more shortest paths from the source to the destination by iteratively computing one or more shortest path for each feature of the features. The entity 1, e.g. the algorithm orchestration module 12, may be configured to use, in a first iteration, initial costs of arcs (i.e. links) of the network for computing the one or more shortest paths for each feature. The entity 1, e.g. the algorithm orchestration module 12, may be configured to determine, in each iteration, whether among the computed shortest paths one or more shortest paths exist that fulfil all of the features. The entity 1, e.g. the algorithm orchestration module 12, may be configured to stop the iterative computation, in case among the computed shortest paths one or more shortest paths fulfilling all the features exist. The entity 1, e.g. the algorithm orchestration module 12, may be configured to update, for each feature, the costs of the arcs of the network with a value depending on a mismatch between the one or more shortest paths computed with respect to the feature and the one or more shortest paths computed with respect to one or more remaining features of the features and start a further iteration using the respective updated costs of the arcs (i.e. links), in case among the computed shortest paths one or more shortest paths fulfilling all the features do not exist.

As outlined above, the entity 1, e.g. the algorithm orchestration module 12, may be configured to iteratively compute the one or more shortest paths for each feature of the features by performing a column generation algorithm using a restricted master problem (RMP) with constraints defined by the following variables: A first set of variables comprising binary link choice variables to construct an elementary path from the source to the destination, and a second set of variables comprising a binary path choice variable for each feature and each path of a set of paths computable by an algorithm covering the feature of the two or more algorithms. The binary link choice variables may be constrained to be selected along each arc (i.e. link) of a path selected according to the second set of variables.

As outlined above, the entity 1, e.g. the algorithm orchestration module 12, may be configured to update, for each feature, the costs of the arcs (i.e. links) of the network by using a linear programming solver. The entity may be configured to consider the restricted master problem (RMP), where variables may be relaxed. For example, fractional may be greater than or equal to zero.

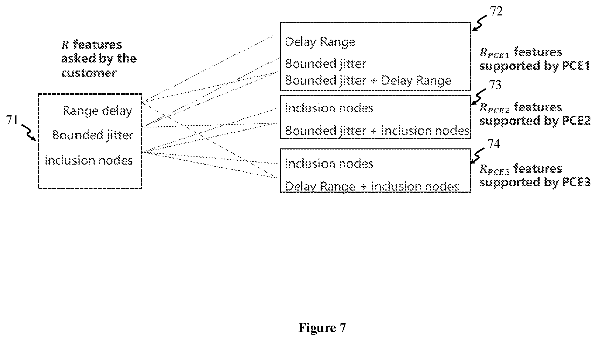

**Fig. 7** shows an example of selecting, by the entity of Fig. 3, algorithms for desired features. In the following an exemplary procedure is described that may be performed by the strategy definition module 11 for selecting algorithms.

In the following description of Fig. 7, it is assumed that the one or more path computation entities are PCEs. This is only by way of example and does not limit this disclosure. Thus, the following description is correspondingly valid for other types of path computation entities.

For the description of the procedure of Fig. 7 the following notations are assumed:
*G =* (*U* ∪ *V, E*) is a network where *U* is the set of features requested by a customer and *V* is the set of algorithms (PCE algorithms). If an algorithm v can solve the feature u then a link *uv* is considered in E. For each algorithm *v ∈ V* a cost *cᵥ* associated with the utilization of the algorithm is considered. This cost may represent the preference for a particular PCE or its efficiency. The set of links outgoing the feature u (respectively incoming the algorithm v) may be denote by *δ*⁺(*u*) (respectively by *δ*⁻(*v*)).

The strategy definition module 11 may be configured to find a set of algorithms to solve the required features of the customer. The problem may be represented by the bipartite graph of Fig. 7. On the left three different features 71 asked by the customer are exemplarily shown: range, bounded jitter and inclusion nodes. The type and number of the desired features is only by way of example and may be different. On the right three different PCEs 72, 73 and 74 are indicated, which are named "PCE1", "PCE2" and "PCE3", respectively. For example, it is assumed that the PCE 72 supports three different algorithms, wherein an algorithm considers for path computation the feature delay range, a further algorithm considers for path computation the feature bounded jitter and a furthermore algorithm considers for path computation the features bounded jitter and delay range. It is assumed that the PCE 73 supports two different algorithms, wherein an algorithm considers for path computation the feature inclusion nodes and a further algorithm considers for path computation the features bounded jitter and inclusion nodes. In addition, it is assumed that the PCE 74 supports two different algorithms, wherein an algorithm considers for path computation the feature inclusion nodes and a further algorithm considers for path computation the features delay range and inclusion nodes. The type and number of the PCEs is only by way of example and may be different.

The problem to be solved by the strategy definition module 11 is to map the requested features to available PCE features, i.e. algorithms that consider for path computation the requested features, in an efficient manner (e.g. select the cheapest PCEs or the most efficient). To solve the associated optimization problem one may model with the following integer linear program: $min {\sum }_{v ∈ V} {c}_{v} {x}_{v}$ ${\sum }_{uv ∈ {δ}^{+} \left(u\right)} {y}_{uv} = 1 ∀ u ∈ U$ ${\sum }_{uv ∈ {δ}^{-} \left(v\right)} {y}_{uv} \leq {x}_{v} ∀ v ∈ V$ where the variables are defined as follows:
*xᵥ* ∈ {0,1}: *equals to 1 if algorithm v is selected, 0 otherwise.*
*yᵤᵥ* E {0,1}: *equals to 1 if feature u is solved using algorithm v,* 0 *otherwise.*

The first family of constraints ensures that each feature is covered by an algorithm. The second family of constraints guarantees that a PCE covers each feature (one PCE may cover several features). To solve this integer linear program, the strategy definition module 11 may use a linear programing solver, like Cplex or Gurobi.

In view of above, the entity 1, e.g. the strategy definition module 11, may be configured to select, according to at least the features for path computation, the two or more algorithms among the algorithms of the one or more path computation entities such that one or more selected path computation entities, of which the two or more algorithms are selected, of the one or more path computation entities cover the features.

As outlined above, the entity 1, e.g. the strategy definition module 11, may be configured to select, according to at least the features for path computation, the two or more algorithms among the algorithms of the one or more path computation entities such that a cost associated with a utilization of the selected two or more algorithms is minimum.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. An entity (1) for computing, according to features for path computation, one or more shortest paths from a source to a destination in a network, wherein the entity is configured to select, according to at least the features for path computation, two or more algorithms among algorithms of one or more path computation entities, and
compute, using the selected two or more algorithms, the one or more shortest paths from the source to the destination such that the one or more shortest paths fulfil the features for path computation;
wherein the entity (1) is further configured to compute, using the selected two or more algorithms, the one or more shortest paths from the source to the destination by iteratively computing one or more shortest path for each feature of the features for path computation;
use, in a first iteration, initial costs of arcs of the network for computing the one or more shortest paths for each feature;
determine, in each iteration, whether among the computed shortest paths one or more shortest paths exist that fulfil all of the features for path computation;
stop the iterative computation, in case among the computed shortest paths one or more shortest paths fulfilling all the features for path computation exist; and
update, for each feature, the costs of the arcs of the network with a value depending on a mismatch between the one or more shortest paths computed with respect to the feature and the one or more shortest paths computed with respect to one or more remaining features of the features for path computation and start a further iteration using the respective updated costs of the arcs, in case among the computed shortest paths one or more shortest paths fulfilling all the features for path computation do not exist.

2. The entity (1) according to claim 1, wherein the entity (1) is configured to receive, as an input, one or more parameters for computation and/or one or more user preferences with regard to the one or more path computation entities.

3. The entity (1) according to any one of the previous claims, wherein the one or more path computation entities are at least one of:
part of a common domain of the network:
one or more network controllers and/or one or more algorithm libraries;
one or more path computation elements or one or more software defined networking controllers.

4. The entity (1) according to any one of the previous claims, wherein the features for path computation comprise or are at least two of the following: one or more upper bound constraints, one or more lower bound constraints, one or more range constraints, one or more network node inclusion conditions, number of disjoint paths, single path computation and multiple paths computation.

5. The entity (1) according to any one of the previous claims, wherein a data base (13) comprises the algorithms of multiple path computation entities, the entity (1) comprise the data base (13) or is configured to access the data base (13), and the entity (1) is configured to select the two or more algorithms among algorithms (2) of the multiple path computation entities of the data base (13).

6. The entity (1) according to any one of the previous claims, wherein the entity (1) is configured to select, according to at least the features for path computation, the two or more algorithms among the algorithms (2) of the one or more path computation entities such that each feature of the features for path computation is covered by at least one of the two or more algorithms.

7. The entity (1) according to any one of the previous claims, wherein the entity (1) is configured to select, according to at least the features for path computation, the two or more algorithms among the algorithms (2) of the one or more path computation entities such that one or more selected path computation entities, of which the two or more algorithms are selected, of the one or more path computation entities cover the features for path computation.

8. The entity (1) according to any one of the previous claims, wherein the entity (1) is configured to select, according to at least the features for path computation, the two or more algorithms among the algorithms (2) of the one or more path computation entities such that a cost associated with a utilization of the selected two or more algorithms is minimum.

9. The entity (1) according to claim 8, wherein the cost associate with a utilization of the selected two or more algorithms represents at least one of a preference for a path computation entity, a financial cost and an efficiency of a path computation entity.

10. The entity (1) according to any one of the previous claims, wherein the entity (1) is configured to iteratively compute the one or more shortest paths for each feature of the features for path computation by performing a column generation algorithm using a restricted master problem with constraints defined by the following variables:
- a first set of variables comprising binary link choice variables to construct an elementary path from the source to the destination, and
- a second set of variables comprising a binary path choice variable for each feature and each path of a set of paths computable by an algorithm covering the feature of the two or more algorithms; wherein
- the binary link choice variables are constrained to be selected along each arc of a path selected according to the second set of variables.

11. The entity (1) according to any one of the previous claims, wherein the entity (1) is configured to update, for each feature, the costs of the arcs of the network by using a linear programming solver.

12. A method for computing, according to features for path computation, one or more shortest paths from a source to a destination in a network, wherein the method comprises selecting (S1), according to at least the features for path computation, two or more algorithms among algorithms of one or more path computation entities, and
computing (S2), using the selected two or more algorithms, the one or more shortest paths from the source to the destination such that the one or more shortest paths fulfil the features for path computation;
wherein the method further comprises computing, using the selected two or more algorithms, the one or more shortest paths from the source to the destination by iteratively computing one or more shortest path for each feature of the features for path computation;
using, in a first iteration, initial costs of arcs of the network for computing the one or more shortest paths for each feature;
determining, in each iteration, whether among the computed shortest paths one or more shortest paths exist that fulfil all of the features for path computation;
stopping the iterative computation, in case among the computed shortest paths one or more shortest paths fulfilling all the features for path computation exist; and
updating, for each feature, the costs of the arcs of the network with a value depending on a mismatch between the one or more shortest paths computed with respect to the feature and the one or more shortest paths computed with respect to one or more remaining features of the features for path computation and start a further iteration using the respective updated costs of the arcs, in case among the computed shortest paths one or more shortest paths fulfilling all the features for path computation do not exist.

13. A computer program comprising instructions which, when the program is executed by a computer, cause the computer to carry out the method according to claim 12.

14. A computer-readable storage medium comprising instructions which, when executed by a computer, cause the computer to carry out the method according to claim 12.

## Patentansprüche

1. Einheit (1) zum Berechnen eines oder mehrerer kürzester Pfade von einer Quelle zu einem Ziel in einem Netzwerk gemäß Merkmalen zur Pfadberechnung, wobei die Einheit dazu konfiguriert ist, gemäß mindestens den Merkmalen zur Pfadberechnung zwei oder mehr Algorithmen unter Algorithmen von einer oder mehreren Pfadberechnungseinheiten auszuwählen, und
den einen oder die mehreren kürzesten Pfade von der Quelle zu dem Ziel unter Verwendung der zwei oder mehreren ausgewählten Algorithmen derart zu berechnen, dass der eine oder die mehreren kürzesten Pfade die Merkmale zur Pfadberechnung erfüllen;
wobei die Einheit (1) ferner dazu konfiguriert ist, den einen oder die mehreren kürzesten Pfade von der Quelle zu dem Ziel unter Verwendung der zwei oder mehreren ausgewählten Algorithmen durch iteratives Berechnen eines oder mehrerer kürzester Pfade für jedes Merkmal der Merkmale zur Pfadberechnung zu berechnen; die Anfangskosten von Bögen des Netzwerks zum Berechnen eines oder mehrerer kürzester Pfade für jedes Merkmal in einer ersten Iteration zu verwenden;
in jeder Iteration zu bestimmen, ob unter den berechneten kürzesten Pfaden ein oder mehrere kürzeste Pfade existieren, die alle der Merkmale zur Pfadberechnung erfüllen;
die iterative Berechnung zu beenden, falls unter den berechneten kürzesten Pfaden ein oder mehrere kürzeste Pfade existieren, die alle Merkmale zur Pfadberechnung erfüllen; und
die Kosten der Bögen des Netzwerks für jedes Merkmal mit einem Wert zu aktualisieren, der von einer Nichtübereinstimmung zwischen dem einen oder den mehreren kürzesten Pfaden, die in Bezug auf das Merkmal berechnet werden, und dem einen oder den mehreren kürzesten Pfaden, die in Bezug auf ein oder mehrere verbleibende Merkmale der Merkmale zur Pfadberechnung berechnet werden, abhängt, und eine weitere Iteration unter Verwendung der jeweiligen aktualisierten Kosten der Bögen zu starten, falls unter den berechneten kürzesten Pfaden ein oder mehrere kürzeste Pfade nicht existieren, die alle Merkmale zur Pfadberechnung erfüllen.

2. Einheit (1) nach Anspruch 1, wobei die Einheit (1) dazu konfiguriert ist, einen oder mehrere Parameter zur Berechnung und/oder eine oder mehrere Benutzerpräferenzen in Bezug auf die eine oder die mehreren Pfadberechnungseinheiten als Eingabe zu empfangen.

3. Einheit (1) nach einem der vorhergehenden Ansprüche, wobei die eine oder die mehreren Pfadberechnungseinheiten mindestens eine der folgenden sind:
Teil einer gemeinsamen Domäne des Netzwerks;
eine oder mehrere Netzwerksteuerungen und/oder eine oder mehrere Algorithmenbibliotheken;
ein oder mehrere Pfadberechnungselemente oder ein oder mehrere softwaredefinierte Netzwerksteuerungen.

4. Einheit (1) nach einem der vorhergehenden Ansprüche, wobei die Merkmale zur Pfadberechnung mindestens zwei der folgenden umfassen oder sind: eine oder mehrere Obergrenzenbeschränkungen, eine oder mehrere Untergrenzenbeschränkungen, eine oder mehrere Bereichsbeschränkungen, eine oder mehrere etzknoteneinschlussbedingungen, eine Anzahl disjunkter Pfade, Berechnung von Einzelpfaden und Berechnung mehrerer Pfade.

5. Einheit (1) nach einem der vorhergehenden Ansprüche, wobei eine Datenbank (13) die Algorithmen von Mehrpfad-Berechnungseinheiten umfasst, die Einheit (1) die Datenbank (13) umfasst oder dazu konfiguriert ist, auf die Datenbank (13) zuzugreifen, und die Einheit (1) dazu konfiguriert ist, die zwei oder mehreren Algorithmen unter den Algorithmen (2) der Mehrpfad-Berechnungseinheiten der Datenbank (13) auszuwählen.

6. Einheit (1) nach einem der vorhergehenden Ansprüche, wobei die Einheit (1) dazu konfiguriert ist, die zwei oder mehreren Algorithmen unter den Algorithmen (2) der einen oder mehreren Pfadberechnungseinheiten gemäß mindestens den Merkmalen zur Pfadberechnung derart auszuwählen, dass jedes Merkmal der Merkmale zur Pfadberechnung durch mindestens einen der zwei oder mehreren Algorithmen abgedeckt wird.

7. Einheit (1) nach einem der vorhergehenden Ansprüche, wobei die Einheit (1) dazu konfiguriert ist, die zwei oder mehreren Algorithmen unter den Algorithmen (2) der einen oder mehreren Pfadberechnungseinheiten gemäß mindestens den Merkmalen zur Pfadberechnung derart auszuwählen, dass eine oder mehrere ausgewählte Pfadberechnungseinheiten, von welchen die zwei oder mehreren Algorithmen ausgewählt sind, der einen oder mehreren Pfadberechnungseinheiten die Merkmale zur Pfadberechnung abdecken.

8. Einheit (1) nach einem der vorhergehenden Ansprüche, wobei die Einheit (1) dazu konfiguriert ist, die zwei oder mehreren Algorithmen unter den Algorithmen (2) der einen oder mehreren Pfadberechnungseinheiten gemäß den Merkmalen zur Pfadberechnung derart auszuwählen, dass die Kosten, die mit einer Nutzung der zwei oder mehreren ausgewählten Algorithmen verbunden sind, minimal sind.

9. Einheit (1) nach Anspruch 8, wobei die Kosten, die mit einer Nutzung der zwei oder mehreren ausgewählten Algorithmen verbunden sind, mindestens eine von einer Präferenz für eine Pfadberechnungseinheit, Finanzkosten und eine Effizienz einer Pfadberechnungseinheit darstellen.

10. Einheit (1) nach einem der vorhergehenden Ansprüche, wobei die Einheit (1) dazu konfiguriert ist, den einen oder die mehreren kürzesten Pfade für jedes Merkmal der Merkmale zur Pfadberechnung durch Durchführen eines Spaltengenerierungsalgorithmus unter Verwendung eines eingeschränkten Masterproblems mit Beschränkungen, die durch die folgenden Variablen definiert sind, iterativ zu berechnen:
- einen ersten Satz von Variablen, umfassend Auswahlvariablen für binäre Verknüpfungen, um einen elementaren Pfad von der Quelle zu dem Ziel zu konstruieren, und
- einen zweiten Satz von Variablen, umfassend eine Auswahlvariable für binäre Pfade für jedes Merkmal und jeden Pfad eines Pfadsatzes, der durch einen Algorithmus berechenbar ist, der das Merkmal der zwei oder mehreren Algorithmen abdeckt; wobei
- die Auswahlvariablen für binäre Verknüpfungen eingeschränkt sind, um entlang jedes Bogens eines Pfades, der gemäß dem zweiten Variablensatz ausgewählt wird, ausgewählt zu werden.

11. Einheit (1) nach einem der vorhergehenden Ansprüche, wobei die Einheit (1) dazu konfiguriert ist, die Kosten der Bögen des Netzwerks für jedes Merkmal unter Verwendung eines linearen Programmierlösers zu aktualisieren.

12. Verfahren zum Berechnen eines oder mehrerer kürzester Pfade von einer Quelle zu einem Ziel in einem Netzwerk gemäß Merkmalen zur Pfadberechnung, wobei das Verfahren Folgendes umfasst
Auswählen (S1) von zwei oder mehreren Algorithmen unter Algorithmen einer oder mehrerer Pfadberechnungseinheiten gemäß mindestens der Merkmale zur Pfadberechnung, und
Berechnen (S2) des einen oder der mehreren kürzesten Pfade von der Quelle zu dem Ziel unter Verwendung der zwei oder mehreren ausgewählten Algorithmen derart, dass der eine oder die mehreren kürzesten Pfade die Merkmale zur Pfadberechnung erfüllen;
wobei das Verfahren ferner das Berechnen des einen oder der mehreren kürzesten Pfade von der Quelle zu dem Ziel unter Verwendung der zwei oder mehreren ausgewählten Algorithmen durch iteratives Berechnen eines oder mehrerer kürzester Pfade für jedes Merkmal der Merkmale zur Pfadberechnung umfasst;
Verwenden der Anfangskosten von Bögen des Netzwerks zum Berechnen eines oder mehrerer kürzester Pfade für jedes Merkmal in einer ersten Iteration;
Bestimmen in jeder Iteration, ob unter den berechneten kürzesten Pfaden ein oder mehrere kürzeste Pfade existieren, die alle der Merkmale zur Pfadberechnung erfüllen;
Beenden der iterativen Berechnung, falls unter den berechneten kürzesten Pfaden ein oder mehrere kürzeste Pfade existieren, die alle Merkmale zur Pfadberechnung erfüllen; und
Aktualisieren der Kosten der Bögen des Netzwerks für jedes Merkmal mit einem Wert, der von einer Nichtübereinstimmung zwischen dem einen oder den mehreren kürzesten Pfaden, die in Bezug auf das Merkmal berechnet werden, und dem einen oder den mehreren kürzesten Pfaden, die in Bezug auf ein oder mehrere verbleibende Merkmale der Merkmale zur Pfadberechnung berechnet werden, abhängt, und eine weitere Iteration unter Verwendung der jeweiligen aktualisierten Kosten der Bögen zu starten, falls unter den berechneten kürzesten Pfaden ein oder mehrere kürzeste Pfade nicht existieren, die alle Merkmale zur Pfadberechnung erfüllen.

13. Computerprogramm, umfassend Anweisungen, welche bei Ausführung des Programms durch einen Computer bewirken, dass der Computer das Verfahren nach Anspruch 12 durchführt.

14. Computerlesbares Speichermedium, umfassend Anweisungen, welche bei Ausführung durch einen Computer bewirken, dass der Computer das Verfahren nach Anspruch 12 durchführt.

## Revendications

1. Entité (1) pour calculer, selon des caractéristiques de calcul de trajet, un ou plusieurs trajets les plus courts, d'une source à une destination, dans un réseau, dans laquelle l'entité est configurée pour sélectionner, selon au moins les caractéristiques de calcul de trajet, deux ou plusieurs algorithmes parmi les algorithmes d'une ou plusieurs entités de calcul de trajet, et
calculer, à l'aide des deux ou plusieurs algorithmes sélectionnés, les un ou plusieurs trajets les plus courts de la source à la destination de sorte que les un ou plusieurs trajets les plus courts satisfont les caractéristiques de calcul de trajet ;
dans laquelle l'entité (1) est en outre configurée pour calculer, à l'aide des deux ou plusieurs algorithmes sélectionnés, les un ou plusieurs trajets les plus courts, de la source à la destination, en calculant de manière itérative un ou plusieurs trajets les plus courts pour chaque caractéristique des caractéristiques de calcul de trajet ;
utiliser, dans une première itération, les coûts initiaux des arcs du réseau pour calculer les un ou plusieurs trajets les plus courts pour chaque caractéristique ;
déterminer, à chaque itération, si parmi les trajets les plus courts calculés il existe un ou plusieurs trajets les plus courts qui satisfont toutes les caractéristiques de calcul de trajet ; interrompre le calcul itératif s'il existe, parmi les trajets les plus courts calculés, un ou plusieurs trajets les plus courts satisfaisant toutes caractéristiques de calcul de trajet ; et
mettre à jour, pour chaque caractéristique, les coûts des arcs du réseau avec une valeur dépendant d'une inadéquation entre les un ou plusieurs trajets les plus courts calculés par rapport à la caractéristique et les un ou plusieurs trajets les plus courts calculés par rapport à une ou plusieurs autres caractéristiques des caractéristiques de calcul de trajet, et démarrer une nouvelle itération en utilisant les coûts mis à jour respectifs des arcs, s'il n'existe pas, parmi les trajets les plus courts calculés, un ou plusieurs trajets les plus courts satisfaisant toutes les caractéristiques de calcul de trajet.

2. Entité (1) selon la revendication 1, dans laquelle l'entité (1) est configurée pour recevoir, en entrée, un ou plusieurs paramètres de calcul et/ou une ou plusieurs préférences de l'utilisateur concernant les une ou plusieurs entités de calcul de trajet.

3. Entité (1) selon l'une quelconque des revendications précédentes, dans laquelle les une ou plusieurs entités de calcul de trajet sont au moins l'une des suivantes :
une partie d'un domaine commun du réseau :
un ou plusieurs contrôleurs de réseau et/ou une ou plusieurs bibliothèques d'algorithmes ;
un ou plusieurs éléments de calcul de trajet ou un ou plusieurs contrôleurs de réseau définis par logiciel.

4. Entité (1) selon l'une quelconque des revendications précédentes, dans laquelle les caractéristiques de calcul de trajet comprennent ou sont au moins deux des suivantes : une ou plusieurs contraintes de limite supérieure, une ou plusieurs contraintes de limite inférieure, une ou plusieurs contraintes de plage, une ou plusieurs conditions d'inclusion de nœuds de réseau, un nombre de trajets disjoints, un calcul de trajet unique et un calcul de trajets multiples.

5. Entité (1) selon l'une quelconque des revendications précédentes, dans laquelle une base de données (13) comprend les algorithmes d'entités de calcul de trajets multiples, l'entité (1) comprend la base de données (13) ou est configurée pour accéder à la base de données (13), et l'entité (1) est configurée pour sélectionner deux ou plusieurs algorithmes parmi les algorithmes (2) des entités de calcul de trajets multiples de la base de données (13).

6. Entité (1) selon l'une quelconque des revendications précédentes, dans laquelle l'entité (1) est configurée pour sélectionner, selon au moins les caractéristiques de calcul de trajet, les deux ou plusieurs algorithmes parmi les algorithmes (2) des une ou plusieurs entités de calcul de trajet de sorte que chaque caractéristique des caractéristiques de calcul de trajet soit couverte par au moins l'un des deux ou plusieurs algorithmes.

7. Entité (1) selon l'une quelconque des revendications précédentes, dans laquelle l'entité (1) est configurée pour sélectionner, selon au moins les caractéristiques de calcul de trajet, deux ou plusieurs algorithmes parmi les algorithmes (2) des une ou plusieurs entités de calcul de trajet de sorte qu'une ou plusieurs entités de calcul de trajet sélectionnées, dont les deux ou plusieurs algorithmes sont sélectionnés, des une ou plusieurs entités de calcul de trajet couvrent les caractéristiques de calcul de trajet.

8. Entité (1) selon l'une quelconque des revendications précédentes, dans laquelle l'entité (1) est configurée pour sélectionner, selon au moins les caractéristiques de calcul de trajet, les deux ou plusieurs algorithmes parmi les algorithmes (2) des une ou plusieurs entités de calcul de trajet de sorte que le coût associé à l'utilisation des deux ou plusieurs algorithmes sélectionnés soit minimal.

9. Entité (1) selon la revendication 8, dans laquelle le coût associé à une utilisation des deux ou plusieurs algorithmes sélectionnés représente au moins l'une d'une préférence pour une entité de calcul de trajet, un coût financier et une efficacité d'une entité de calcul de trajet.

10. Entité (1) selon l'une quelconque des revendications précédentes, dans laquelle l'entité (1) est configurée pour calculer de manière itérative les un ou plusieurs trajets les plus courts pour chaque caractéristique des caractéristiques de calcul de trajet en réalisant un algorithme de génération de colonnes utilisant un problème maître restreint avec des contraintes définies par les variables suivantes :
- un premier ensemble de variables comprenant des variables binaires de choix de liens pour construire un trajet élémentaire de la source à la destination, et
- un second ensemble de variables comprenant une variable binaire de choix de trajet pour chaque caractéristique et chaque trajet d'un ensemble de trajets calculables par un algorithme couvrant la caractéristique des deux ou plusieurs algorithmes ; dans laquelle
- les variables binaires de choix de liens sont contraintes d'être sélectionnées le long de chaque arc d'un trajet sélectionné selon le second ensemble de variables.

11. Entité (1) selon l'une quelconque des revendications précédentes, dans laquelle l'entité (1) est configurée pour mettre à jour, pour chaque caractéristique, les coûts des arcs du réseau en utilisant un solveur de programmation linéaire.

12. Procédé pour calculer, selon des caractéristiques de calcul de trajet, un ou plusieurs trajets les plus courts, d'une source à une destination, dans un réseau, dans lequel le procédé comprend
la sélection (S1), selon au moins les caractéristiques de calcul de trajet, de deux ou plusieurs algorithmes parmi les algorithmes d'une ou plusieurs entités de calcul de trajet, et le calcul (S2), à l'aide des deux ou plusieurs algorithmes sélectionnés, des un ou plusieurs trajets les plus courts, de la source à la destination, de sorte que les un ou plusieurs trajets les plus courts satisfont les caractéristiques de calcul de trajet ;
dans lequel le procédé comprend en outre le calcul, à l'aide des deux ou plusieurs algorithmes sélectionnés, des un ou plusieurs trajets les plus courts, de la source à la destination, en calculant de manière itérative un ou plusieurs trajets les plus courts pour chaque caractéristique des caractéristiques de calcul de trajet ;
l'utilisation, dans une première itération, des coûts initiaux des arcs du réseau pour calculer les un ou plusieurs trajets les plus courts pour chaque caractéristique ;
le fait de déterminer, à chaque itération, si parmi les trajets les plus courts calculés il existe un ou plusieurs trajets les plus courts qui satisfont toutes les caractéristiques de calcul de trajet ;
l'interruption du calcul itératif s'il existe, parmi les trajets les plus courts calculés, un ou plusieurs trajets les plus courts satisfaisant toutes les caractéristiques de calcul du trajet ; et
la mise à jour, pour chaque caractéristique, des coûts des arcs du réseau avec une valeur dépendant d'une inadéquation entre les un ou plusieurs trajets les plus courts calculés par rapport à la caractéristique et les un ou plusieurs trajets les plus courts calculés par rapport à une ou plusieurs autres caractéristiques des caractéristiques de calcul de trajet, et le lancement d'une nouvelle itération en utilisant les coûts mis à jour respectifs des arcs, s'il n'existe pas, parmi les trajets les plus courts calculés, un ou plusieurs trajets les plus courts satisfaisant toutes les caractéristiques de calcul de trajet.

13. Programme informatique comprenant des instructions qui, lorsque le programme est exécuté par un ordinateur, amènent l'ordinateur à mettre en œuvre le procédé selon la revendication 12.

14. Support de stockage lisible par ordinateur comprenant des instructions qui, lorsqu'elles sont exécutées par un ordinateur, amènent l'ordinateur à mettre en œuvre le procédé selon la revendication 12.
